# EUROPÄISCHE PATENTSCHRIFT

(11) **EP 1 556 237 B1**
(45) Veröffentlichungstag und Bekanntmachung des Hinweises auf die Patenterteilung: **22.03.2006**
(21) Anmeldenummer: 03773539.6
(22) Anmeldetag: 17.10.2003
(51) Int. Cl.: B60J 7/12, G01P 15/00, G01C 9/00

(54) **KRAFTFAHRZEUG MIT EINEM FAHRBAREN VERDECK**
MOTOR VEHICLE WITH A CONVERTIBLE ROOF
VEHICULE AUTOMOBILE A CAPOTE MOBILE

(30) Priorität: 18.10.2002 DE 10248759
(43) Veröffentlichungstag der Anmeldung: 27.07.2005
(73) Patentinhaber: Wilhelm Karmann GmbH, 49084 Osnabrück (DE)
(72) Erfinder: HÖFERS, Thorsten, 49565 Bramsche (DE); VEDDER, Joachim, 49086 Osnabrück (DE)
(86) Internationale Anmeldenummer: PCT/DE2003/003441
(87) Internationale Veröffentlichungsnummer: WO 2004/037582

(56) Entgegenhaltungen:
- EP-A- 0 550 952
- EP-A- 1 180 443
- DE-A- 10 009 692
- DE-A- 10 039 978
- DE-A- 10 201 871
- US-A- 5 167 296
- US-B1- 6 253 602

## Beschreibung

Die Erfindung betrifft ein Kraftfahrzeug mit einem fahrbaren Verdeck und einer Einrichtung zur Verdeck-Positionserkennung nach der im Oberbegriff des Patentanspruches 1 näher bezeichneten Art.

Cabriolet-Kraftfahrzeuge weisen häufig ein fahrbares Verdeck auf, welches beispielsweise durch eine Tasterbetätigung automatisch von einer geöffneten in eine geschlossene Position oder umgekehrt bewegt werden kann. Die Verdeckbewegung erfolgt dabei üblicherweise durch einen hydraulischen Antrieb, welcher einen Verdeckmechanismus antreibt, der ein Verdeckgestänge, unter dem vorliegend sowohl eine Trageinrichtung für ein Textildach als auch ein sogenanntes Hard-Top-Klappdach mit im wesentlichen starren Dachelementen zu verstehen ist, und gegebenenfalls einen Deckel für einen Verdeckaufnahmeraum sowie alle hierdurch bewegten Elemente umfaßt. Zur Steuerung der Bewegung des Verdeck ist es erforderlich, Informationen über die aktuelle Position des Verdecks zu erhalten.

In der DE 198 42 337 A1 wird eine Betätigungseinrichtung für ein Verdeck eines Cabriolets mit einem eine Hydraulikpumpe und an dem Verdeck angelenkte Hydraulikmotoren aufweisenden Hydraulikgetriebe beschrieben, welche einen Positionsgeber zur Erzeugung von elektrischen Signalen in Abhängigkeit von den Positionen des Verdecks und eine Steuerelektronik zur Erzeugung des vorgesehenen Bewegungsablauf des Verdecks und zur Erfassung der elektrischen Signale des Positionsgebers aufweist. Zur Erfassung der Verdeckposition sind an den Enden des Bewegungsbereichs des Verdecks sowie innerhalb des Bewegungsbereichs des Verdecks Endschalter angeordnet, welche ein Signal an die Steuerelektronik ausgeben, sobald das Verdeck den Endlagenschalter erreicht. Dabei wird jedem Bereich zwischen zwei Endlagenschaltern eine konstante Drehzahl oder eine konstante Leistung eines die Hydraulikpumpe antreibenden Elektromotors zugeordnet.

Die Endschalter dienen als Stützpunkte für die Positionserkennung. Zur Ermittlung der Position des Verdecks zwischen diesen Stützpunkten wird vorgeschlagen, die Drehzahl des Motors über der Zeit zu integrieren und die Verdeckposition zu interpolieren. Zur Vermeidung einer hohen Anzahl von Endschaltern wird in der DE 198 42 337 A1 vorgeschlagen, über die Anzahl der Umdrehungen des Elektromotors und das durchschnittliche Verdrängervolumen der Hydraulikpumpe die ungefähre Position des Verdecks mittels der Steuereinrichtung zu berechnen.

Nachteilhaft ist hierbei jedoch, daß zwischen den Stützpunkten mit Endschaltern nur theoretische, mathematisch ermittelte Informationen über die Verdeckposition zur Verfügung stehen, welche beispielsweise bei einer Schwankung in der Geschwindigkeit der Verdeckbewegung nicht mehr mit der realen Verdeckposition übereinstimmen. Zudem hat diese Lösung den Nachteil, daß zur Erhöhung der Genauigkeit der Information bezüglich der aktuellen Verdeckposition eine Vielzahl von Endschaltern im Bewegungsbereich des Verdecks mit entsprechend hohem Aufwand vorgesehen werden müssen.

Zur genaueren Ermittlung der aktuellen Position des Verdecks können gemäß der DE 198 42 337 A1 auch Sensoren zur Erfassung eines Stellwinkels oder Stellweges eines Gestänges des Verdecks vorgesehen sein, wobei die Sensoren beispielsweise wie ein Potentiometer ein analoges Signal erzeugen oder Markierungen auf dem Gestänge abtasten und zählen.

Derartige als Potentiometer ausgebildete Sensoren zur kontinuierlichen Wegabfrage müssen jedoch direkt an dem Drehpunkt des abzufragenden Verdeckteils angebracht werden, wobei es problematisch ist, daß das Potentiometer aufgrund seiner physikalischen Eigenschaften eine hier hinderliche Baugröße nicht unterschreiten kann. Es besteht daher bei Verwendung derartiger Sensoren die Gefahr von Kollisionen zwischen den Sensoren und anderen Verdecksegmenten.

Zudem ist ein solcher als Potentiometer ausgebildeter Sensor ein mechanisches Teil, das bei Beanspruchung verschleißt und einer Temperaturdrift unterliegt, welche zu Fehlern bezüglich der Information über die aktuelle Verdeckposition führt.

Aus der Praxis ist es weiter bekannt, die Verdeckposition über die Messung eines Ausfahrweges von Zylindern einer Hydraulik des Verdeckantriebes zu ermitteln. Hier ist jedoch zu berücksichtigen, daß eine solche Lösung einen vergleichsweise großen Bauraum erfordert und keine Information über die Lage des Verdecks an sich liefert, sondern nur über den Verfahrweg eines Zylinders. Damit kann gegebenenfalls ein defekter Anbindungspunkt, d. h. eine Unterbrechung einer Verbindung zwischen einem Zylinder und dem Verdeckgestänge, nicht erkannt werden.

Die hohe Fehlerbehaftung der bekannten Einrichtungen zur Verdeck-Positionserkennung wirken sich insbesondere nachteilhaft auf die Detektion einer Einklemmsituation aus, da Störungen im Ablauf der Verdeckbewegung, wie z. B. eine verlangsamte Bewegung oder ein Blockieren des Verdecks, welche Anzeichen für das Einklemmen eines Gegenstandes oder eines menschlichen Körperteils in den Verdeckmechanismus sein können, gegebenenfalls nicht oder erst sehr spät ermittelt werden.

Es ist die Aufgabe der vorliegenden Erfindung, ein Kraftfahrzeug mit einem automatisiert fahrbaren Verdeck bereitzustellen, welches über eine Einrichtung zur Verdeck-Positionserkennung verfügt, welche zuverlässige Informationen über die reale aktuelle Position des Verdecks liefert.

Erfindungsgemäß wird diese Aufgabe mit einem Kraftfahrzeug mit einem fahrbaren Verdeck gemäß den Merkmalen des Patentanspruches 1 gelöst.

Die erfindungsgemäße Lösung hat den Vorteil, daß die kontinuierliche Überwachung der Position des Verdecks, wobei mittels wenigstens eines eine aktuelle Beschleunigung bezogen auf die Fallbeschleunigung messenden Beschleunigungssensors die Position eines definierten Elements des Verdecks ermittelt wird, eine genaue Lageerkennung des Verdecks zu jedem Zeitpunkt möglich ist.

Mit Hilfe solcher auch G-Sensoren genannter Beschleunigungssensoren, die zwei Achsen in einer Ebene, die Längsbeschleunigung und die Querbeschleunigung erfassen, kann die Längsneigung und die Querneigung des Verdecks ermittelt werden. Durch eine sehr hohe mögliche Auflösung der Beschleunigung läßt sich der Winkel zur Erdoberfläche auf ca. 0,2° auflösen.

Neben der großen Genauigkeit bei der Verdeck-Positionserkennung bietet die Verwendung von G-Sensoren auch den Vorteil einer großen konstruktiven Freiheit bei ihrer Anordnung, da eine solche Verdeck-Positionserkennung unabhängig von der Verdeckkinematik realisiert werden kann.

Zudem haben derartige Beschleunigungssensoren den Vorteil, daß sie auch noch für andere Funktionalitäten im Fahrzeug, wie z. B. eine Überrollerkennung, genutzt werden können.

Insbesondere vorteilhaft ist die mit hoher Genauigkeit arbeitende erfindungsgemäße Einrichtung zur Verdeck-Positionserkennung bei einem Zusammenwirken mit einer Detektionseinrichtung zur Erkennung eines Eingriffs in einen Bewegungsraum eines Verdeckmechanismus, welche beispielsweise eine Sensorik mit nach unterschiedlichen Meßprinzipien messenden Sensoren aufweisen kann, wobei nach Erkennen einer Störung der Detektionseinrichtung oder nach Erkennen einer Einklemmsituation die Verdeckbewegung in einem Sicherheitsmodus gesteuert wird.

Die Bereitstellung einer Information über die exakte reale Verdeckposition ermöglicht dabei eine der jeweiligen Betriebssituation angepaßte Reaktion, welche in einem Fortfahren der Verdeckbewegung mit reduzierter Geschwindigkeit oder einem Stoppen oder Reversieren der Verdeckbewegung bestehen kann.

Weitere Vorteile und vorteilhafte Ausgestaltungen der Erfindung sind der Beschreibung, der Zeichnung und den Patentansprüchen entnehmbar.

Ein Ausführungsbeispiel der Erfindung ist in der Zeichnung schematisch vereinfacht dargestellt und wird in der nachfolgenden Beschreibung näher erläutert.
Es zeigt:
- Fig. 1: eine vereinfachte perspektivische Ansicht eines fahrbaren Verdecks eines Cabriolet-Kraftfahrzeugs mit einer Einrichtung zur Verdeck-Positionserkennung nach der Erfindung, wobei sich das in Alleinstellung dargestellte Verdeck in einem geschlossenen Zustand befindet; und
- Fig. 2: eine schematisierte Draufsicht auf ein weiteres Verdeck eines Cabriolet-Kraftfahrzeugs mit der Einrichtung zur Verdeck-Positionserkennung nach Figur 1.

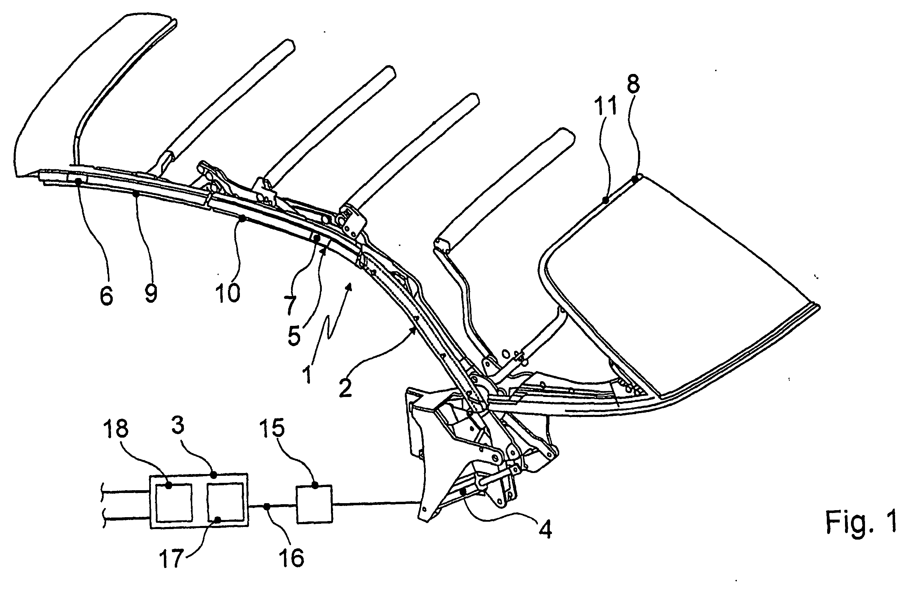

Die Figur 1 zeigt ein fahrbares Verdeck 1 eines Cabriolet-Kraftfahrzeugs in Alleinstellung, welches einen mit einem Textildach überziehbaren Verdeckmechanismus 2 umfaßt, der durch eine ein Verdecksteuergerät darstellende Steuereinrichtung 3 und einen in Figur 1 nur ausschnittsweise dargestellten elektro-hydraulischen Verdeckantrieb 4 zwischen einer geöffneten und einer geschlossenen Stellung bewegbar ist.

Die Steuereinrichtung 3 ist dabei derart ausgelegt, daß sie mit einem Regensensor und einem Funkschlüssel zusammenwirkt, und bei einer Anforderung durch den Fahrer mittels einer Tasteinrichtung in dem Fahrzeug oder durch den Funkschlüssel sowie bei Erkennen eines Niederschlags durch den Regensensor eine automatische Verdeckbewegung einleitet.

Zur Ermittlung der aktuellen Position des Verdecks 1 bzw. seines Verdeckmechanismus 2 ist eine Einrichtung 5 zur Verdeck-Positionserkennung vorgesehen, welche mehrere Beschleunigungssensoren 6, 7, 8 aufweist, von denen bei der Ausführung nach Figur 1 ein erster Beschleunigungssensor 6 auf einem vorderen, an ein Fahrzeugfenster angrenzenden Gestängeabschnitt 9, ein zweiter Beschleunigungssensor 7 auf einem bezogen auf die Fahrzeuglänge mittleren, an ein Fahrzeugfenster grenzenden Gestängeabschnitt 10 und ein dritter Beschleunigungssensor 8 an einem Heckscheibenrahmen 11 angeordnet ist.

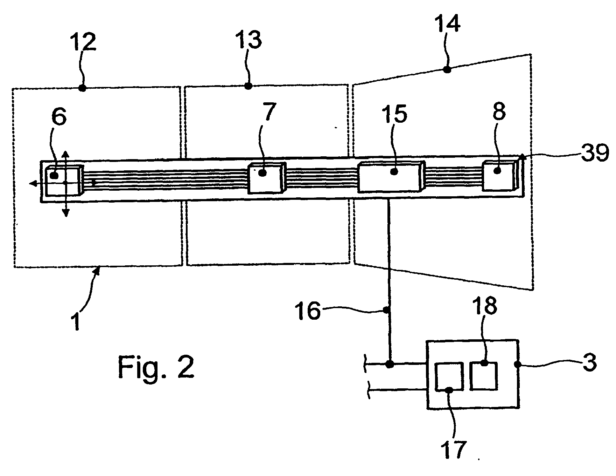

In der Zeichnung sind sowohl in Figur 1 als auch in Figur 2 nur drei Beschleunigungssensoren dargestellt, jedoch kann je nach Anwendungsfall auch eine andere Zahl von Beschleunigungssensoren eingesetzt werden. Die Anordnung der Beschleunigungssensoren 6, 7, 8 in den Figuren 1 und 2 ist ebenfalls nur beispielhaft und kann je nach Verdeckbauart anders gewählt werden.

Die Figur 2 zeigt eine Anwendung der Einrichtung 5 zur Verdeck-Positionserkennung bei einem als Hard-Top-Klappdach ausgeführten Verdeck 1', bei dem die Beschleunigungssensoren 6, 7, 8 auf unterschiedlichen Dachsegmenten angeordnet sind, so z. B. vorliegend der erste Beschleunigungssensor 6 auf einem vorderen Dachsegment 12, der zweite Beschleunigungssensor 7 auf einem mittleren Dachsegment 13 und der dritte Beschleunigungssensor 8 auf einem hinteren Dachsegment 14.

Die Beschleunigungssensoren 6, 7, 8 lassen sich an dem Verdeck 1 bzw. 1' frei positionieren, wobei lediglich auf die Ausrichtung in einem definierten Koordinatensystem geachtet werden muß.

Die Beschleunigungssensoren 6, 7, 8 stellen sogenannte G-Sensoren dar, welche eine aktuelle Beschleunigung bezogen auf die Fall- bzw. Erdbeschleunigung messen und wiedergeben. Die auf der Erde vorliegende Fallbeschleunigung von 9,81 m/s² entspricht dabei 1 G (G = Gravitation). Die Beschleunigungssensoren 6, 7, 8 messen nicht nur die Beschleunigung des Elements, auf dem sie jeweils befestigt sind, sondern auch die Neigung zur Erdoberfläche. Die hier verwendeten Beschleunigungssensoren 6, 7, 8 arbeiten in einem Bereich von 0 G bis maximal 10 G und liefern eine Ausgangsspannung linear zu dem Beschleunigungswert.

Wie insbesondere der Figur 2 zu entnehmen ist, sind die Beschleunigungssensoren 6, 7, 8 an dem Verdeck 1 bzw. 1' über einen geeigneten Leitungssatz oder einen hochflexiblen Streifenleiter mit einer Auswerteeinheit 15 verbunden, die die Auswertung der Sensorsignale vornimmt und aus den einzelnen Positionen eine relative Position errechnet. Die errechnete relative Position der Beschleunigungssensoren 6, 7, 8 bzw. der sie tragenden Bauteile wird von der Auswerteeinheit 15 über ein Bussystem wie z. B. einen CAN-Bus 16 an das Verdecksteuergerät 3 gesendet.

In dem Verdecksteuergerät 3 befindet sich bei der hier gezeigten Ausführung ein weiterer als G-Sensor ausgebildeter Beschleunigungssensor 17, der die Lage bzw. Neigung des Kraftfahrzeugs in dem definierten Koordinatensystem, dem auch die Beschleunigungssensoren 6, 7, 8 zugeordnet sind, ermittelt. Aus der Relativposition und der somit vorliegenden Information über die Fahrzeugneigung errechnet das Verdecksteuergerät 3 die aktuelle Position des Verdecks 1 bzw. 1'.

Die aktuelle Verdeckposition wird unter anderem an eine Auswerteeinheit einer automatischen Detektionseinrichtung 18 zur Erkennung eines Eingriffs in einen Bewegungsraum des Verdeckmechanismus 2 ausgegeben, welche bezüglich ihrer Auswerteeinheit vorliegend in das Verdecksteuergerät 3 integriert ist und in den Figuren 1 und 2 lediglich symbolisch angedeutet ist. Die Detektionseinrichtung 18, welche beispielsweise eine Sensorik mit optischen und/oder kapazitiven Sensoren aufweisen kann, kann in Kenntnis der aktuellen Verdeckposition mit hoher Genauigkeit eine Einklemmsituation erkennen, womit das Verdecksteuergerät 3 eine angemessene Reaktion einleiten kann.

Mit der Einrichtung 5 zur Verdeck-Positionserkennung nach der Erfindung kann vorteilhafterweise auch auf übliche Verdeckendlagenschalter verzichtet werden, da bei Erreichen eines Anschlags des Verdecks 1 bzw. 1', d. h. bei vollständig geschlossener oder geöffneter Position, von den Beschleunigungssensoren 6, 7, 8, welche hierbei eine starke negative Beschleunigung erfahren, ein entsprechender Impuls ausgegeben wird.

Des weiteren ist es mit der vorliegenden kontinuierlichen Verdeck-Positionserkennung möglich, eine adaptive, beispielsweise durch ein einmaliges manuelles Anfahren einzelner definierter Verdeckpositionen selbstlernende Steuerung der Verdeckbewegung zu realisieren.

## Patentansprüche

1. Kraftfahrzeug mit einem fahrbaren Verdeck, wobei eine Steuereinrichtung zur Steuerung einer verdeckbewegung und eine Einrichtung zur Verdeck-Positionserkennung vorgesehen sind,
**dadurch gekennzeichnet ,**
**daß** die Einrichtung (5) zur Verdeck-Positionserkennung die Position des Verdecks (1; 1') kontinuierlich überwacht, wobei mittels wenigstens eines eine aktuelle Beschleunigung bezogen auf die Fallbeschleunigung messenden Beschleunigungssensors (6, 7, 8) die Position eines definierten Elements des Verdecks (1; 1') ermittelt wird.

2. Kraftfahrzeug nach Anspruch 1,
**dadurch gekennzeichnet,**
**daß** mehrere Beschleunigungssensoren (6, 7, 8) an Elementen (9, 10, 11; 12, 13, 14) eines Verdeckmechanismus (2) angeordnet und mit einer Auswerteeinheit (15) verbunden sind, die aus Signalen der Beschleunigungssensoren (6, 7, 8) eine relative Position errechnet, welche zusammen mit einer vorliegenden Information über die Fahrzeugneigung die aktuelle Verdeckposition ergibt.

3. Kraftfahrzeug nach Anspruch 1 oder 2,
**dadurch gekennzeichnet,**
**daß** die Steuereinrichtung (3) zur Steuerung der Verdeckbewegung einen weiteren Beschleunigungssensor (17) zur Ermittlung der Fahrzeugneigung aufweist.

## Claims

1. Motor vehicle with a movable top, wherein control means for controlling a movement of the top and means for recognising the position of the top are provided,
**characterised in that**
the means (5) for recognising the position of the top continuously monitors the position of the top (1; 1'), the position of a defined element of the top (1; 1') being determined by means of at least one accelerometer (6, 7, 8) measuring an instantaneous related to the acceleration due to gravity.

2. Motor vehicle according to claim 1,
**characterised in that**
a plurality of accelerometers (6, 7, 8) are arranged on elements (9, 10, 11; 12, 13, 14) of a mechanism (2) for the top and are connected to evaluating means (15), which calculates a relative position from signals of the accelerometers (6, 7, 8), which relative position, together with existing information on the vehicle inclination, yields the instantaneous position of the top.

3. Motor vehicle according to claim 1 or 2,
**characterised in that**
the control means (3) for controlling the movement of the top comprises a further accelerometer (17) for determining the vehicle inclination.

## Revendications

1. Voiture à capote déplaçable, dans laquelle sont prévus un dispositif de commande pour commander un mouvement de la capote et un dispositif de détection de la position de la capote, **caractérisée en ce que** le dispositif (5) de détection de la position de la capote surveille en continu la position de la capote (1; 1'), surveillance permettant de déterminer la position d'un élément défini de la capote (1; 1') au moyen d'au moins un détecteur d'accélération (6,7,8) mesurant une accélération effective par rapport à l'accélération due à la pesanteur.

2. Voiture selon la revendication 1, **caractérisée en ce que** plusieurs détecteurs d'accélération (6,7,8) sont disposés sur des éléments (9, 10, 11; 12, 13, 14) d'un mécanisme de capote (2) et reliés à une unité d'exploitation (15), qui calcule une position relative à partir de signaux des détecteurs d'accélération (6, 7, 8), laquelle donne, avec une information disponible sur l'inclinaison de la voiture, la position effective de la capote.

3. Voiture selon la revendication 1 ou 2, **caractérisée en ce que** le dispositif de commande (3) pour commander le mouvement de la capote présente un détecteur supplémentaire d'accélération (17) pour déterminer l'inclinaison de la voiture.
